# EUROPEAN PATENT SPECIFICATION

(11) **EP 4 230 444 B1**
(45) Date of publication and mention of the grant of the patent: **18.12.2024**
(21) Application number: 22157156.5
(22) Date of filing: 17.02.2022
(51) Int. Cl.: B60C 23/06, B60W 40/13, G01G 19/08, B60C 23/04, B60K 28/08, G01C 21/34, B60C 19/00, B60W 30/184

(54) **A METHOD FOR DETERMINING A RECOMMENDED LOAD FOR A VEHICLE TO BE OPERATED ALONG A PREDEFINED ROUTE**
VERFAHREN ZUR BESTIMMUNG EINER EMPFOHLENEN LAST FÜR EIN FAHRZEUG, DAS ENTLANG EINER VORDEFINIERTEN ROUTE BETRIEBEN WERDEN SOLL
PROCÉDÉ DE DÉTERMINATION DE CHARGE RECOMMANDÉE POUR LE FONCTIONNEMENT D'UN VÉHICULE LE LONG D'UN ITINÉRAIRE PRÉDÉFINI

(43) Date of publication of application: 23.08.2023
(73) Proprietor: VOLVO TRUCK CORPORATION, 405 08 Göteborg (SE)
(72) Inventor: IUSTIN, Roman, 435 37 Mölnlycke (SE)
(74) Representative: Zacco Sweden AB

(56) References cited:
- EP-A1- 3 076 131
- WO-A1-2020/259044
- CN-A- 112 036 413
- US-A1- 2020 041 297

## Description

### TECHNICAL FIELD

The present invention relates to a method for determining a recommended load for a vehicle to be operated along a predefined route.

The invention is applicable on various types of vehicles configured to carry a load. For instance, it is advantageously applicable on trucks or on working machines within the fields of industrial construction machines or construction equipment, such as wheel loaders, articulated haulers, excavators, forwarders and backhoe loaders, etc. Although the description of the invention will focus on working machines, the invention is not restricted to this particular vehicle, but may also be used for other types of vehicles that are configured to carry a load.

### BACKGROUND

Working machines in the form of articulated haulers, wheel loaders, trucks, forwarders and dumpers are frequently used for loading and transporting of material loads at construction sites, in forestry, in mining, and the like. A load-receiving container of a hauler or dump truck may, for instance, be loaded with unprocessed material, at a loading location, transport the material to another location and dump the material (in)to a material processing device.

Working machines are often operated at sites where the roads are rough. This may, for instance, be roads inside tunnels (for example in mines) or at open sites. Loaded vehicles passing on such rough roads have specific weights. In confined area applications, such as transportation in mines and the like, vehicles traverse the same route over and over again. The ground surface inside tunnels may be uneven and the vehicle tires may therefore be subjected to uneven loads, which may in some cases result in tire overload even if the maximum vehicle load has not been breached. In particular, the road topography may affect how the weight of a loaded vehicle is distributed on individual tires. At certain sections of the road, one of the tires of the vehicle may need to support a considerably larger portion of the weight compared to the other tires. This means that even though the vehicle is loaded within the recommended maximum vehicle load, in certain instances, the weight on an individual tire may become larger than what it has been dimensioned to resist. This, in turn, results in that the tire becomes more rapidly worn out than expected To this end, it has been known to use special reinforced tires for loaded vehicles operating on such rough roads.

US 2020/0041297 A1 discloses a method for determining a route for a vehicle based on an estimation of the weight of the vehicle. A tire monitoring unit senses tire deformations. The weight of the vehicle is estimated based on the sensing and at least one route among two or more routes is selected, based on such estimated weight of the vehicle. For example, in case of a heavily loaded vehicle, a route may be selected with no or only a little winding, or with no or only small uphills/downhills. However, the method disclosed in US 2020/0041297 A1 does not provide a solution to the above mentioned problem relating to the risk of overloading individual tires on rough roads, leading to prematurely worn out tires.

EP 3 076 131 A1 discloses a navigation method in which status information of tires of a vehicle is obtained. Road condition information in real time is also obtained. Route navigation for the vehicle is performed according to the status information, the road condition information and a preset navigation strategy.

### SUMMARY

An object of the present invention is to provide a method which at least partly mitigates the above mentioned drawbacks and provides an improvement over the prior art. This and other objects, which will become apparent in the following discussion, are accomplished by a method as defined in the accompanying independent claim. Some non-limiting exemplary embodiments are presented in the dependent claims.

The inventor has realized that the road topography data for a predefined route that is frequently travelled by a vehicle, such as a working machine at a construction site, in a mine, etc. may advantageously be used to determine the maximum load of the vehicle for said predefined route. In particular, the inventor has realized that depending on the topography different tires of the vehicle will be subject to different forces. For example, if there are more and/or larger rocks that need to be driven over on one side of the predefined route, the tires on that side of the vehicle will be affected differently than the tires on the other side. A maximum load may therefore suitably be recommended such that the wear rate of all tires are within acceptable levels. Similarly, when driving through a curve, the inner and outer wheels will be subjected to different loads. Thus, if the predefined route has more curves towards on direction (for example, more left curves than right curves) then this will also affect the tires on the two sides differently.

According to a first aspect of the present invention, there is provided method for determining a recommended maximum load for a vehicle to be operated along a predefined route, comprising:
- acquiring road topography data for said predefined route, the road topography data containing information about the topography of the road along said predefined route,
- determining, based on the acquired road topography data, a respective maximum allowable tire load for each individual tire of the vehicle for said predefined route, and
- determining, based on the determined maximum allowable tire loads, a recommended maximum load for the vehicle for said predefined route.

By the provision of a method which uses information about the topography of the road for determining a maximum allowable tire load for each individual tire, which in turn is used for determining a recommended maximum load of the vehicle, an effective and well-founded recommendation may be given. Since tires of working machines and the like are subjected to large loads, they normally need to be replaced after a certain time period due to the wear of the tire. Different sites and contractors may have different requirements with respect to how long time or what distance a tire should be able to handle before it is considered to be worn to such a state that it needs to be replaced. By using the suggested method of the present invention, a maximum load for the vehicle may be recommended which takes the individual tires into account as they may be subjected to individual wear rates when repeatedly moving along the predefined route. By determining for each tire a respective maximum allowable tire load which is considered to allow sufficient long usage of each tire, a maximum load for the vehicle can be calculated and recommended, wherein said recommended maximum load for the vehicle is selected such that if the vehicle is not subjected to a higher load than said recommended maximum load then the risk of the tires becoming subjected to individual tire loads that exceed the respective determined maximum allowable tire loads will be very low. As a result, the risk of premature wear of any individual tire will also be very low. In this connection, "wear rate" may be considered as the time it takes for, or the travelled distance it takes for, a new tire on a vehicle to reach such a state that it is considered in need of replacement. In other words, it can be seen as a measure of how soon a tire needs to be replaced.

The road topography data may be acquired in various different ways. It may for instance be acquired by driving the vehicle equipped with means that can sense, capture, or otherwise obtain information about the topography of the road along said predefined route. Thus, in at least some exemplary embodiments, a vehicle may be driven along the predefined route to acquire the road topography data. It should be noted, however, that it does not need to be the same vehicle as the one for which you want to determine a recommended maximum load. Thus, in at least some exemplary embodiments, a test vehicle may be used for acquiring the road topography data, and that acquired data can then be used for recommending a maximum load for other vehicles that will operate along the predefined route. However, in some exemplary embodiments the vehicle for which you want to recommend a maximum load may also be the vehicle used for acquiring the road topography data. These different possibilities are at least partly reflected in some of the following exemplary embodiments.

According to at least one exemplary embodiment, the step of acquiring road topography data comprises:
- causing said vehicle or another vehicle to travel along said predefined route,
- acquiring tire deformation data representative of deformations of the tires of said vehicle or said another vehicle occurring when said vehicle or said another vehicle travels along said predefined route,
- determining the road topography data based on the acquired tire deformation data.

This is advantageous as the tires will follow the road along the predefined route substantially in the same way each time. Thus, by looking at the deformation of the tire it is possible to create a picture of the varying roughness of the different sections of the road. Suitably if it is another vehicle that is used for acquiring the tire deformation data, than the vehicle for which a maximum load is to be recommended, then such another vehicle may suitably be of the same type and have the same type of tires as the vehicle that is to receive a recommended maximum load. This will increase the accuracy of the recommendation, as the tires of the vehicles are then more likely to follow substantially the same track.

The acquiring of tire deformation data may be achieved in various different ways. For instance, the tire deformation may be monitored by means of cameras or the tire deformations may be detected by means of deformation sensors. The latter example is reflected in the following exemplary embodiment.

According to at least one exemplary embodiment, the tires of said vehicle or said another vehicle are provided with tire sensors configured to register deformation of the individual tires when said vehicle or said another vehicle travels along said predefined route,
wherein said step of acquiring tire deformation data comprises:
- acquiring tire deformation data by means of said tire sensors when said vehicle or said another vehicle travels along said route.

This is advantageous as such deformation sensors may undergo the corresponding deformation as the tires, whereby accurate tire deformation data is obtainable, which can then be calculated to road topography data that will be satisfactory.

It should be understood that the tires that are provided with tire sensors may be integrated tire sensors that were incorporated into the rubber of the tires when the tires were manufactured, or they may have been applied to the tire after the tires have been manufactured. This is at least partly reflected in the following exemplary embodiment.

According to at least one exemplary embodiment, prior to said step of acquiring road topography data for said predefined route:
- mounting, on each tire of said vehicle or said another vehicle, a plurality of said tire sensors such that they are distributed in the circumferential direction of the tire, or
- integrating, during manufacturing of each tire of said vehicle or said another vehicle, a plurality of said tire sensors in the rubber of the tire such that they become distributed in the circumferential direction of the completed tire.

By having the tire sensors distributed around the tire, more measurement points may be obtained and the derived road topography data will be even more accurate. The more tire sensors that are provided the more measuring points will be obtained as the tire rolls along the road of the predefined route.

According to at least one exemplary embodiment, the tire sensors are configured to register tire deformation in a plurality of directions, such as the longitudinal, lateral and vertical directions of the respective tire. This may be achieved by individual tire sensors sensing strain in different directions, or by means of an array of differently arranged/positioned tire sensors. By sensing the deformation in a plurality of directions, an even more accurate representation of the topography may be obtainable.

According to at least one exemplary embodiment, said step of determining a respective maximum allowable tire load comprises:
- determining the respective maximum allowable tire load for each individual tire based on said acquired tire deformation data.

Thus, in addition to determining the maximum allowable tire load for each individual tire based on the acquired road topography data (i.e. based on the surface variations of the ground on which the tires will roll), the determination of the maximum allowable tire load may also take into account the tire deformation data. For instance, two left wheels on separate axles of a vehicle, one arranged behind the other, may travel along substantially same path. If the tires of these wheels are provided with tire deformation sensors, the tire deformation data from both of the tires will contribute to obtaining a good representation of the road topography. However, depending on the location of the two wheel axles, one of the two tires may be subjected to more load than the other one. Therefore, the by taking into account individual deformation data of each tire, an improved determination of maximum allowable load for each individual tire may be obtained.

The wear rate of individual tires may suitably be calculated or estimated by means of empirical studies or models/algorithms based on different load scenarios. Such estimations/calculations may e.g. be stored in a database for subsequent use when it is desired to determine a maximum allowable tire load. Thus, in order to reduce the risk of premature wear of the tires, i.e. wanting to make sure that the tires should be able to operate without a need for replacement for a certain number of travels along the route (or a certain number of operating hours or operating miles, etc.), then the results of such calculations/estimations may be used to determine the maximum load for each tire. This is at least partly reflected in the following exemplary embodiment.

According to at least one exemplary embodiment, said step of determining a respective maximum allowable tire load comprises:
- accessing stored tire wear data, in which expected wear of an individual tire is represented as a function of forces applied to the individual tire over time,
- determining the respective maximum allowable tire load for each individual tire based on said stored tire wear data.

Since large forces can be expected to result in more wear, it can thus be determined that if the vehicle is to travel on a road with large roughness where large forces on the tires are expected, the tire wear data will indicate faster ware rate than if compared to ware data that has been acquired from smoother roads. In this way, by categorizing different topographies, different wear rates or ranges of wear rates may be estimated. Suitably, the tier wear data may also take into account the frequency of the applied forces. The more repetitions of a certain force applied to a tire along the road, the more will the wear be. Other parameters may also be used for creating a database or a matrix with different topographical characteristics of the road. In this way the database may comprise a multitude of different combinations of frequency/force patterns which may provide different wear rates.

According to at least one exemplary embodiment, said step of determining a respective maximum allowable tire load comprises:
- accessing tire identification data, wherein the tire identification data comprises information about the tires of said vehicle, such as type of tire, manufacturer, model of the tire, and/or dimensions of the tire,
- determining the respective maximum allowable tire load based on said tire identification data and said road topography data.

Thus, this takes into account that the tires of different tire manufacturers (or different tire models from the same manufacturer) may behave differently and have different wear rates. Therefore, it may be advantageous to have the tire identification data stored in a database, e.g. in a look-up table, etc.. Based on the knowledge of which type of tire is mounted on the vehicle and based on information about the road topography, a maximum allowable tire load can be calculated by a suitably algorithm, or via a database in which different tire types have been tested for different types of topographies, similarly to the previous discussion. For example, the number of holes in the ground in different size ranges, may be used to estimate how many and how large impact each tire will be subjected to, and depending on the type of tire that is mounted on the vehicle, the maximum allowable load can be determined accordingly.

As already mentioned previously in this disclosure, using tire deformation sensors is not the only way to acquire the road topography data, but other ways of implementing the method of the present invention are also conceivable. This is at least partly reflected in the following exemplary embodiment.

According to at least one exemplary embodiment, the step of acquiring road topography data comprises:
- causing said vehicle or another vehicle to travel along said predefined route, wherein said vehicle is equipped with an optical camera or with a detector comprising a wave emitter and a wave receiver for receiving a reflected wave, wherein the detector is suitably one of a Lidar, radar or ultrasonic detector,
- scanning the road by means of the optical camera or detector when said vehicle or said another vehicle travels along said route.

It should be understood that although using an optical camera or a detector for scanning the road may be used instead of using tire deformation sensors, it is conceivable to provide a vehicle with both scanning equipment and with tire deformation sensors, to further increases the accuracy of the road topography determination. In other exemplary embodiments, it is conceivable to use one vehicle equipped with optical camera or detector for scanning the road, while another vehicle has tire sensors. In this way road topography data may be acquired by two vehicles by different procedures, and may if desired be compared/combined to further improve the accuracy of the method of this invention.

According to a second aspect of the present invention, there is provided a computer program comprising program code means for performing the steps of the method of the first aspect, including any embodiment thereof, when said program is run on a computer. The advantages of the computer program of the second aspect are largely analogous to the advantages of the method of the first aspect, including any embodiment thereof.

According to a third aspect of the present invention, there is provided a computer readable medium carrying a computer program comprising program code means for performing the steps of the method of the first aspect, including any embodiment thereof, when said program product is run on a computer. The advantages of the computer readable medium of the third aspect are largely analogous to the advantages of the method of the first aspect, including any embodiment thereof.

According to a fourth aspect of the present invention, there is provided a control unit for determining a recommended load for a vehicle to be operated along a predefined route, the control unit being configured to perform the steps of the method of the first aspect, including any embodiment thereof. The advantages of the control unit of the fourth aspect are largely analogous to the advantages of the method of the first aspect, including any embodiment, thereof.

According to a fifth aspect of the present invention, there is provided a vehicle, comprising:
- a control unit according to the fourth aspect,
- tire sensors configured to register deformation of the individual tires when the vehicle is in motion and configured to generate said tire deformation data, wherein the control unit is configured to acquire the generated tire deformation data, wherein each tire of the vehicle is provided with a plurality of said tire sensors such that they are distributed in the circumferential direction of the tire.

The advantages of the vehicle of the fifth aspect are largely analogous to the advantages of the control unit of the fourth aspect and the method of the first aspect, including any embodiments thereof.

According to at least one exemplary embodiment of the method of the first aspect, said vehicle for which a recommended load is to be determined is a first vehicle, wherein the method comprises using a second vehicle configured according to the vehicle of the fifth aspect for acquiring said road topography data based on the generated tire deformation data. Thus, in a fleet of vehicles, there may suitably be a plurality of first vehicles for which a recommended load is to be determined, while it may suffice to have one second vehicle for acquiring the actual road topography data that will be used in the determinations for the plurality of first vehicles. This principle of having one test vehicle in the fleet may also be used if the "second vehicle" is equipped with the previously discussed scanning equipment (such as an optical camera or Lida/radar, etc.) instead of or in addition to the tire sensors.

Generally, all terms used in the claims are to be interpreted according to their ordinary meaning in the technical field, unless explicitly defined otherwise herein. All references to "a/an/the element, apparatus, component, arrangement, device, means, step, etc." are to be interpreted openly as referring to at least one instance of the element, apparatus, component, arrangement, device, means, step, etc., unless explicitly stated otherwise.

The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

With reference to the appended drawings, below follows a more detailed description of embodiments of the invention cited as examples.

In the drawings:
Fig. 1 is an exemplary illustration of a vehicle in connection with which the general inventive concept of the present invention may be implemented.
Fig. 2 is another exemplary illustration of a vehicle in connection with which the general inventive concept of the present invention may be implemented.
Figs. 3 and 4 illustrate schematically an implementation of the method according to at least one exemplary embodiment of the present invention.
Fig. 5 illustrates a vehicle equipped with scanning equipment which may be used for implementing the method according to at least one exemplary embodiment of the present invention.
Fig. 6 illustrates schematically steps of a method according to at least one exemplary embodiment of the present invention.
Fig. 7 illustrates schematically steps of a method according to at least another exemplary embodiment of the present invention.
Fig. 8 is a simple exemplary graph for illustrating how stored tire wear data may be used when implementing the method according to at least one exemplary embodiment of the present invention.
Fig. 9 schematically illustrates a control unit according to at least one exemplary embodiment of the present invention.
Fig. 10 schematically illustrates a computer program product according to at least one exemplary embodiment of the present invention.

### DETAILED DESCRIPTION OF EXAMPLE EMBODIMENTS OF THE INVENTION

The invention will now be described more fully hereinafter with reference to the accompanying drawings, in which certain aspects of the invention are shown. The invention may, however, be embodied in many different forms and should not be construed as limited to the embodiments and aspects set forth herein; rather, the embodiments are provided by way of example so that this disclosure will be thorough and complete, and will fully convey the scope of the invention to those skilled in the art. Accordingly, it is to be understood that the present invention is not limited to the embodiments described herein and illustrated in the drawings; rather, the skilled person will recognize that many changes and modifications may be made within the scope of the appended claims. Like reference numerals refer to like elements throughout the description.

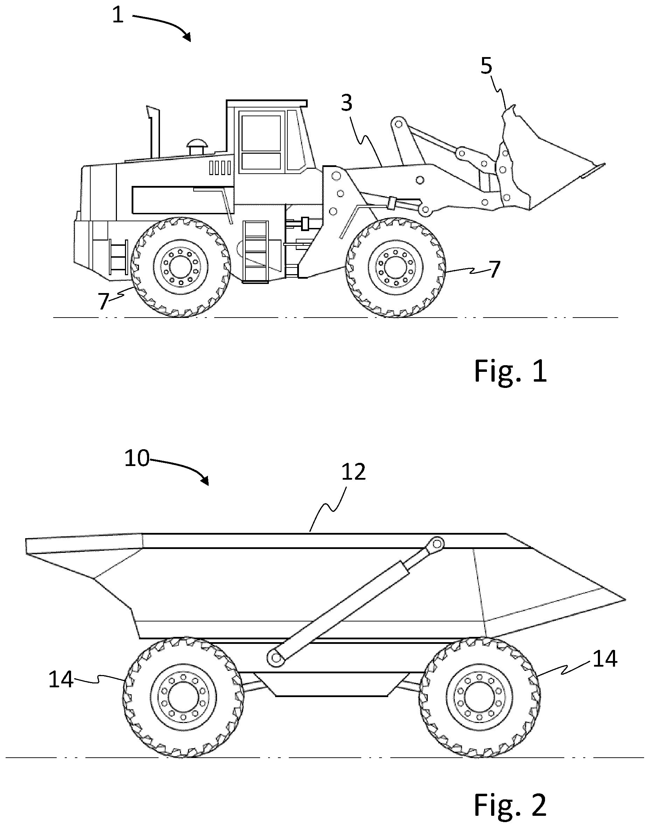

Fig. 1 is an exemplary illustration of a vehicle 1 in connection with which the general inventive concept of the present invention may be implemented. In the present illustration, the vehicle 1 is a working machine in the form of a wheel loader 1. The wheel loader 1 comprises a lift arm unit 3 to which a work tool 5 is connected. In this example, the work tool 5 is illustrated in the shape of a bucket which is mounted on the lift arm unit 3. It should be understood that although the work tool 5 has been illustrated as a bucket, other types of work tools may also be connected to the lift arm unit, such as shovels, forks, gripping tools, material arms or excavating tools. In either case the work tool 5 can be used for carrying a load. The carried load will be distributed to tires 7 of the wheel loader 1.

Fig. 2 is another exemplary illustration of a vehicle 10 in connection with which the general inventive concept of the present invention may be implemented. The vehicle 10 may be comprised in a fleet of autonomous vehicles. The vehicle 10 is an autonomous vehicle and may suitably be electrically powered. For instance, it may be powered by one or more traction batteries energizing an electric motor. In other exemplary embodiments it may be a fuel (e.g. diesel) based vehicle, a hybrid vehicle, hydrogen gas driven vehicle etc. The illustrated vehicle 10 may be in the form of a wagon, having an open top at a material-receiving part 12. The material-receiving part 12 may be in the form of a container presenting a volume into which material may be dispensed. The vehicle 10 has wheels with tires 14 which will be subjected to loads, the magnitude of which depending on the load that has been received in the material-receiving part 14.

The vehicle 10 may be in the form of a working machine for use in one or more industrial applications, such as in quarries, mines, forestry, etc. In the illustrated example, the vehicle is provided with two pairs of wheels, however in other embodiments there may be more pairs of wheels, such as three pairs or four pairs etc. At least one of the pairs of wheels may be controlled to turn the vehicle 10.

Fig. 1 and Fig. 2 are just two exemplary illustrations of conceivable vehicles 1, 10 and it should be understood that the inventive method may be implemented for other types of vehicles as well, as has already been explained previously in this disclosure. Furthermore, from the above explanations, it should be understood that the inventive method may be implemented for driver-operated vehicles, autonomous vehicles or semi-autonomous vehicles, such as vehicles provided with Advanced Driver Assistance Systems (ADAS).

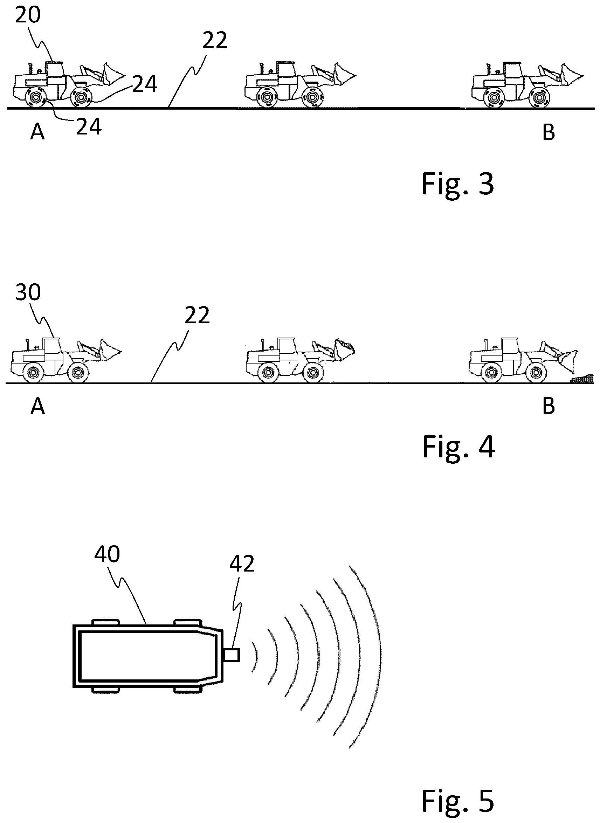

Figs. 3 and 4 illustrate schematically an implementation of the method according to at least one exemplary embodiment of the present invention.

Starting with Fig. 3, a predefined route is illustrated going from point A to point B. Working machines will travel along this predefined route, repeatedly for an extended period of time. Fig. 3 illustrates a vehicle 20 which travels from said point A to point B. The vehicle 20 is illustrated three times, i.e. first at point A, then in an intermediate position between points A and B, and finally when it has arrived at point B. The vehicle 20 may, for instance, be a vehicle such as the wheel loader 1 illustrated in Fig. 1, however, it could of course be another type of vehicle, such as the vehicle 10 in Fig 2 or a different vehicle, such as for instance a truck.

The road 22 on which the tires of the vehicle 20 roll is seldom an even road in places such as quarries, mines, construction sites etc. and on such rough roads the tires will be subjected to different forces along the road, as previously explained in this disclosure. Due to the repetitive nature of the work, at least some of the forces will be substantially repeated when the vehicle 20 travels multiple times along the predefined route.

As schematically indicated in Fig. 3, the tires of the vehicle may be provided with tire sensors 24 that are configured to register deformation of the individual tires. Thus, each tire of the vehicle may suitably be provided with such tire sensors 24. As the vehicle travels from point A to point B, i.e. along the predefined route, the tire sensors 24 will sense the irregularities (such a potholes, rocks, etc.) of the road 22 as the deformations of the tires will vary as the vehicle's 20 travel progresses. The different deformations of the different tires along the road 22 may be used for acquiring information of the topography of the road 22 along said predefined route (i.e. from point A to point B in this illustration). Although the tires only cover a limited part of the width of the road 22 (and therefore information about the topography of the part of the road 22 between the tires may be left out) it is this limited part that is of relevance, since other vehicles (or this vehicle 20) which will carry loads will travel along substantially the same path as the tires of the vehicle 20 in Fig. 3. It should be noted that the vehicle 20 in Fig. 3 does not need to carry a load for acquiring said information about the topography of the road.

Once said information has been acquired, it can be used for recommending a maximum load for a fleet of vehicles that will be used at the worksite and that will repeatedly travel along the predefined route from point A to B. Thus, as illustrated in Fig. 4, when the worksite is up and running, a vehicle 30 in Fig. 4 (which may be one of several similar vehicles) will be recommended a maximum load. The total load carried by the vehicle 30 will be distributed to its tires, and depending on the type of vehicle and the location of the tires, the load distribution at the individual tires may be different, even on a plain ground. Thus, the recommended maximum load will be based on the maximum allowable tire load for each individual tire. This in turn depends on the topography of the road 22. A relative rough road means that at least some of the tires will be subjected to more forces during the travel, compared to if the road 22 would be relatively smooth. Accordingly, in the first case the respective maximum allowable tire load would be set to lower values, while in the second case the values would be higher. This way of compensating for the effect of the road topography on the tires has the benefit of enabling a satisfactory wear rate of the tires. Thus, the risk of the tires being worn out prematurely may be reduced by setting respective maximum allowable tire loads to adequately selected levels, and from this it can be determined what the recommended maximum load of the vehicle 30 should be to avoid exceeding the respective determined maximum allowable tire loads.

Fig. 5 illustrates a vehicle 40 equipped with scanning equipment 42 which may be used for implementing the method according to at least one exemplary embodiment of the present invention. Thus, this provides an alternative or supplementary way to acquire information of the topography. The vehicle 50, which is here illustrated as corresponding or being similar to the vehicle 10 in Fig. 2 (but which may of course be a different vehicle), is provided with scanning equipment 42 for scanning the road (such as the road 22 in Fig. 3 and Fig. 4) when moving along the predefined route (such as from said point A to said point B). The scanning equipment 42 may comprise a camera that captures images which can be interpreted by an electronic control unit for providing information about the topography of the road on which the vehicle 40 travels. Such a camera may, for example, be an optical camera or an infrared camera (which captures thermal images that are then processed by the electronic control unit). An alternative or supplement to cameras are detectors having wave emitters and wave receivers, such as Lidar, radar or ultrasonic detectors. Furthermore, the vehicle may be equipped with a plurality of such cameras and/or detectors. As explained, previously, once the information about the topography has been acquired, a maximum load may be recommended for this vehicle 40 and/or other vehicles. The other vehicles do not need to be equipped with any equipment for acquiring information about the topography.

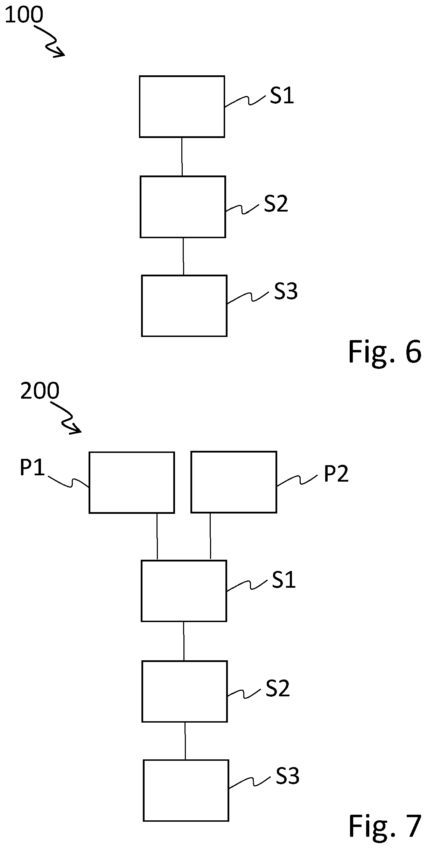

From the above, it should be understood that the inventive method of recommending a maximum load for a vehicle may be achieved regardless of how the information about the topography is acquired, and that Figs. 3 and 5 are just two examples. In the following some exemplary embodiments of the method will be discussed with reference to Figs. 6 and 7.

Fig. 6 illustrates schematically steps of a method 100 according to at least one exemplary embodiment of the present invention. In particular, Fig. 6 illustrates schematically a method 100 for determining a recommended maximum load for a vehicle to be operated along a predefined route (e.g. from a point A to a point B as discussed previously). The method 100 comprises:
- in a step S1, acquiring road topography data for said predefined route, the road topography data containing information about the topography of the road along said predefined route (this may for instance be applied as discussed above in connection with Figs. 3-5, or in any other suitable manner),
- in a step S2, determining, based on the acquired road topography data, a respective maximum allowable tire load for each individual tire of the vehicle for said predefined route, and
- in a step S3, determining, based on the determined maximum allowable tire loads, a recommended maximum load for the vehicle for said predefined route.

As previously discuss, wherein the step S1 may, for instance, comprise:
- causing said vehicle or another vehicle to travel along said predefined route, wherein said vehicle is equipped with an optical camera or with a detector comprising a wave emitter and a wave receiver for receiving a reflected wave, wherein the detector is suitably one of a Lidar, radar or ultrasonic detector,
- scanning the road by means of the optical camera or detector when said vehicle or said another vehicle travels along said route.

With reference back to Fig. 5, this means that the same vehicle for which the maximum load is to be recommended may also be used for scanning the road to acquire the road topography data, or that another vehicle may be used for such scanning.

Similarly, as discussed previously, the step S1 may, for instance, comprise:
- causing said vehicle or another vehicle to travel along said predefined route,
- acquiring tire deformation data representative of deformations of the tires of said vehicle or said another vehicle occurring when said vehicle or said another vehicle travels along said predefined route,
- determining the road topography data based on the acquired tire deformation data. With reference back to Figs. 3 and 4, this means that the same vehicle for which the maximum load is to be recommended may also be used for acquiring the tire deformation data (and thus the road topography data), or that another vehicle may be used for such acquiring. Thus, acquired data may be used for recommending a maximum load for the individual vehicle 20 in Fig. 3 as well as for the other individual vehicle 30 in Fig. 4.

As illustrated in Fig. 3, the tires of said vehicle 20 or said another vehicle may be provided with tire sensors 24 configured to register deformation of the individual tires when said vehicle 20 or said another vehicle travels along said predefined route, wherein said step of acquiring tire deformation data comprises:
- acquiring tire deformation data by means of said tire sensors when said vehicle or said another vehicle travels along said route.

Fig. 7 illustrates schematically steps of a method 200 according to at least another exemplary embodiment of the present invention. The method 200 of Fig. 7 comprises the steps S1-S3 of the method 100 of Fig. 6. However, the method 200 of Fig. 7, further comprises, prior to said step S1 (acquiring road topography data for said predefined route):
- in a step P1, mounting, on each tire of said vehicle or said another vehicle, a plurality of said tire sensors such that they are distributed in the circumferential direction of the tire, or
- in a step P2, integrating, during manufacturing of each tire of said vehicle or said another vehicle, a plurality of said tire sensors in the rubber of the tire such that they become distributed in the circumferential direction of the completed tire.

Thus, the tire sensors 24 illustrated on the vehicle 20 in Fig. 3 may either be manufactured together with the tire or be post-mounted. Regardless of which, tire sensors should suitably be sensors of the type that can register deformation in a plurality of directions, such as the longitudinal, lateral and vertical directions of the respective tire on/in which the sensors are provided.

According to at least one exemplary embodiment (of either one of methods 100 and 200), step S2 (i.e. determining a respective maximum allowable tire load) may comprise:
- determining the respective maximum allowable tire load for each individual tire based on said acquired tire deformation data. Thus, the data acquired by the tires sensors of the vehicle 20 in Fig. 3 may be used for determining the maximum allowable tire load for each individual tire of the vehicle 30 in Fig. 4 (or the vehicle 20 in Fig. 3). Thus, by looking at the tire deformation data, an estimate of the forces that each tire is subjected to may be made. For instance, if it is known (such as through empirical studies) for the type of tires present on the vehicle that at a certain accumulated force over time, a tire of that type will be sufficiently worn and should be replaced by a new tire, then the individual tire load can be appropriately selected, to reduce the risk of premature ware.

From the above it can be understood that in accordance with at least some exemplary embodiments, the methods of the present invention may comprise predicting a tire wear rate of the individual tires based on the recommended maximum load of the vehicle. Conversely, according to at least some exemplary embodiments, the recommended maximum load may be based on a predicted wear rate of the individual tires. This is at least partly reflected in the below exemplary embodiment.

Thus, according to at least one exemplary embodiment, said step S2 (i.e. determining a respective maximum allowable tire load) may comprises:
- accessing stored tire wear data, in which expected wear of an individual tire is represented as a function of forces applied to the individual tire over time,
- determining the respective maximum allowable tire load for each individual tire based on said stored tire wear data.

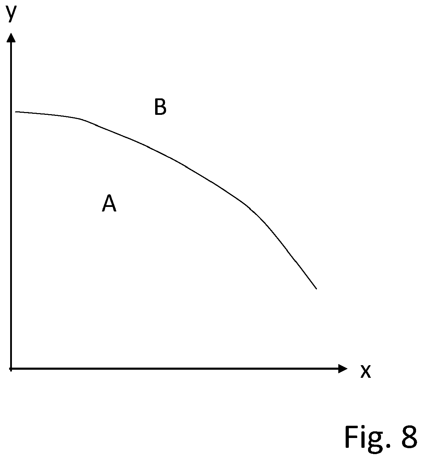

This idea of basing the maximum allowable tire load on stored tire wear data can be further discussed with the simple example shown in Fig. 8.

Fig. 8 is a simple exemplary graph for illustrating how stored tire wear data may be used when implementing the method according to at least one exemplary embodiment of the present invention.

When a vehicle drives on a rough road having bumps and/or depressions, the tires will be repeatedly subjected to different forces. By analysing how the presence of such bumps and/or depressions, such as the number and the size, a good estimation is obtained of the roughness of the ground on which the vehicle has travelled and thus the forces that have affected the tires of the vehicle. A good predictability can be made when it comes to wear and tear, and thus the period for maintenance/replacement of the individual tire. Thus, by making empirical studies extensive databases may be created, which may include empirically determined and collected wear data for tires of different types.

Fig. 8 is a simple exemplary graph which may for example represent expected forces on a tire as a function of the number of repetitions of the force, and may be represented by a plotted graph, in which the x-axis of the graph represents the magnitude of the force (e.g. divided in various force ranges), and the y-axis represents the recurrence (e.g. number of occurrences in each force range). As long as the estimated accumulated forces for an individual tire correspond to values below the plotted graph, i.e. in area A, replacement of the tire is not yet necessary. However, if the estimated accumulated forces for an individual tire corresponds to one or more values which lie above the plotted graph, i.e. in area B, then it may be determined that it is time for replacement of the tire. The exemplary illustration of Fig. 8 shows that this particular tire for this particular predefined route, may be subjected to many small force, but fewer large force repetitions, before a threshold along the plotted curve is reached. Different tires may, of course, have different plots, depending on their sensitivity to the forces that they are subjected to when the vehicle travels on rough roads. It should be noted that Fig. 8 is just one simple example shown for explanatory purposes, and it should be understood that such force analyses may suitably be done for different force directions (such as longitudinal, lateral and vertical forces). It should thus be understood that the exemplary plot is dependent on the topography (e.g. number of holes/bumps, and the dimension of the holes/bumps, the dimension affecting the forces, but also curves in the road will affect the forces of tires on left and right side in different magnitudes) and on the vehicle load (the larger the vehicle load, the faster will you reach the area B). Thus, by recommending a maximum vehicle load, you can predict/estimate after how long time (or after how long travelled distance) the forces of an individual tire will reach area B in Fig. 8.

As understood from above, different types of tires from different manufacturers, or different models from the same manufacturer may have different plots, i.e. have different wear rates. Therefore, according to at least one exemplary embodiment (e.g. of the method 100 in Fig. 6 or the method 200 in Fig. 7), said step S2 (i.e. determining a respective maximum allowable tire load) may comprise:
- accessing tire identification data, wherein the tire identification data comprises information about the tires of said vehicle, such as type of tire, manufacturer, model of the tire, and/or dimensions of the tire,
- determining the respective maximum allowable tire load based on said tire identification data and said road topography data.

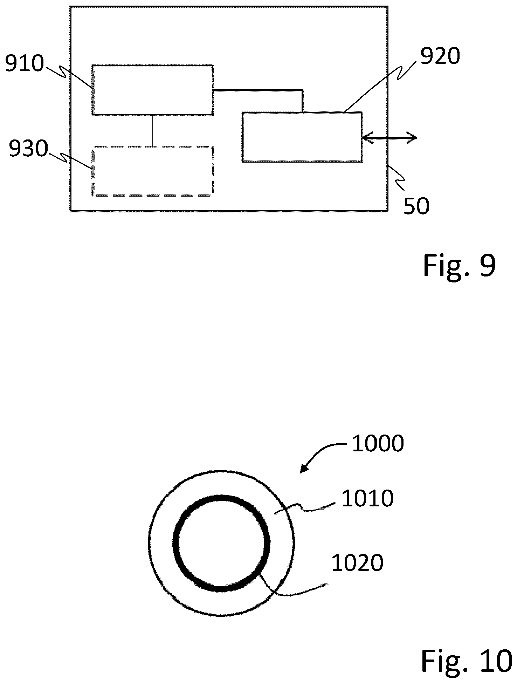

Fig. 9 schematically illustrates a control unit 50 according to at least one exemplary embodiment of the present invention. In particular, Fig. 9 illustrates, in terms of a number of functional units, the components of a control unit 50 according to exemplary embodiments of the discussions herein. The control unit 50 may be comprised in any vehicle disclosed herein, such as the ones illustrated in Figs. 1-5 and others discussed above. Processing circuitry 910 may be provided using any combination of one or more of a suitable central processing unit CPU, multiprocessor, microcontroller, digital signal processor DSP, etc., capable of executing software instructions stored in a computer program product, e.g. in the form of a storage medium 930. The processing circuitry 910 may further be provided as at least one application specific integrated circuit ASIC, or field programmable gate array FPGA.

Particularly, the processing circuitry 910 is configured to cause the control unit 50 to perform a set of operations, or steps, such as the method discussed in connection to Fig. 5 and/or Fig. 6 and exemplary embodiments thereof discussed throughout this disclosure. For example, the storage medium 930 may store the set of operations, and the processing circuitry 910 may be configured to retrieve the set of operations from the storage medium 930 to cause the control unit 50 to perform the set of operations. The set of operations may be provided as a set of executable instructions. Thus, the processing circuitry 910 is thereby arranged to execute exemplary methods as herein disclosed.

The storage medium 930 may also comprise persistent storage, which, for example may be any single one or combination of magnetic memory, optical memory, solid state memory or even remotely mounted memory.

The control unit may 50 further comprise an interface 920 for communications with at least one external device such as the tire sensors, optical camera, detector, database etc. discussed herein. As such, the interface 920 may comprise one or more transmitters and receivers, comprising analogue and digital components and a suitable number of ports for wireline or wireless communication.

The processing circuitry 910 controls the general operation of the control unit 50, e.g. by sending data and control signals to the interface 920 and the storage medium 930, by receiving data and reports from the interface 920, and by retrieving data and instructions form the storage medium 930. Other components, as well as the related functionality, of the control unit 50 are omitted in order not to obscure the concepts presented herein.

Fig. 10 schematically illustrates a computer program product 1000 according to at least one exemplary embodiment of the present invention. More specifically, Fig. 8 illustrates a computer readable medium 1010 carrying a computer program comprising program code means 1020 for performing the methods exemplified in Fig. 6 and/or Fig. 7, when said program product is run on a computer. The computer readable medium 1010 and the program code means 1020 may together form the computer program product 1000.

## Claims

1. A method (100, 200) for determining a recommended maximum load for a vehicle (1, 10, 20, 30, 40) to be operated along a predefined route, comprising:
- acquiring (S1) road topography data for said predefined route, the road topography data containing information about the topography of the road (22) along said predefined route,
- determining (S2), based on the acquired road topography data, a respective maximum allowable tire load for each individual tire (7, 14) of the vehicle for said predefined route, and
- determining (S3), based on the determined maximum allowable tire loads, a recommended maximum load for the vehicle for said predefined route.

2. The method (100, 200) according to claim 1, wherein the step of acquiring (S1) road topography data comprises:
- causing said vehicle or another vehicle to travel along said predefined route,
- acquiring tire deformation data representative of deformations of the tires of said vehicle or said another vehicle occurring when said vehicle or said another vehicle travels along said predefined route,
- determining the road topography data based on the acquired tire deformation data.

3. The method (100, 200) according to claim 2, wherein the tires of said vehicle or said another vehicle are provided with tire sensors (24) configured to register deformation of the individual tires (7, 14) when said vehicle or said another vehicle travels along said predefined route, wherein said step of acquiring tire deformation data comprises:
- acquiring tire deformation data by means of said tire sensors when said vehicle or said another vehicle travels along said route.

4. The method (200) according to claim 3, comprising, prior to said step of acquiring (S1) road topography data for said predefined route:
- mounting (P1), on each tire of said vehicle or said another vehicle, a plurality of said tire sensors such that they are distributed in the circumferential direction of the tire, or
- integrating (P2), during manufacturing of each tire of said vehicle or said another vehicle, a plurality of said tire sensors in the rubber of the tire such that they become distributed in the circumferential direction of the completed tire.

5. The method (100, 200) according to any one of claims 3-4, wherein the tire sensors (24) are configured to register tire deformation in a plurality of directions, such as the longitudinal, lateral and vertical directions of the respective tire (7, 14).

6. The method (100, 200) according to any one of claims 3-5, wherein said step of determining (S2) a respective maximum allowable tire load comprises:
- determining the respective maximum allowable tire load for each individual tire based on said acquired tire deformation data.

7. The method (100, 200) according any one of claims 1-6, wherein the step of acquiring (S1) road topography data comprises:
- causing said vehicle or another vehicle to travel along said predefined route, wherein said vehicle is equipped with an optical camera or with a detector comprising a wave emitter and a wave receiver for receiving a reflected wave, wherein the detector is suitably one of a Lidar, radar or ultrasonic detector,
- scanning the road by means of the optical camera or detector when said vehicle or said another vehicle travels along said route.

8. The method (100, 200) according to any one of claims 1-7, wherein said step of determining (S2) a respective maximum allowable tire load comprises:
- accessing stored tire wear data, in which expected wear of an individual tire is represented as a function of forces applied to the individual tire over time,
- determining the respective maximum allowable tire load for each individual tire based on said stored tire wear data.

9. The method (100, 200) according to any one of claims 1-8, wherein said step of determining (S2) a respective maximum allowable tire load comprises:
- accessing tire identification data, wherein the tire identification data comprises information about the tires of said vehicle, such as type of tire, manufacturer, model of the tire, and/or dimensions of the tire,
- determining the respective maximum allowable tire load based on said tire identification data and said road topography data.

10. A computer program comprising program code means (1020) for performing the steps of the method (100, 200) of any one of claims 1-9 when said program is run on a computer.

11. A computer readable medium (1010) carrying a computer program comprising program code means (1020) for performing the steps of the method (100, 200) of any one of claims 1-9 when said program product is run on a computer.

12. A control unit (50) for determining a recommended load for a vehicle (1, 10, 20, 30, 40) to be operated along a predefined route, the control unit being configured to perform the steps of the method (100, 200) according to any one of claims 1-9.

13. A vehicle (1, 10, 20, 30, 40) comprising:
- a control unit (50) according to claim 12,
- tire sensors (24) configured to register deformation of the individual tires (7, 14) when the vehicle is in motion and configured to generate said tire deformation data, wherein the control unit is configured to acquire the generated tire deformation data, wherein each tire of the vehicle is provided with a plurality of said tire sensors such that they are distributed in the circumferential direction of the tire.

14. The method (100, 200) according to any one of claims 1-9, wherein said vehicle (30) for which a recommended load is to be determined is a first vehicle, the method comprises using a second vehicle (20) configured according to the vehicle of claim 13 for acquiring said road topography data based on the generated tire deformation data.

## Patentansprüche

1. Verfahren (100, 200) zum Bestimmen einer empfohlenen maximalen Last für ein Fahrzeug (1, 10, 20, 30, 40), das entlang einer vordefinierten Route zu betreiben ist, umfassend:
- Erfassen (S1) von Straßentopographiedaten für die vordefinierte Route, wobei die Straßentopographiedaten Informationen über die Topographie der Straße (22) entlang der vordefinierten Route enthalten,
- Bestimmen (S2), basierend auf den erfassten Straßentopographiedaten, einer jeweiligen maximalen zulässigen Reifenlast für jeden einzelnen Reifen (7, 14) des Fahrzeugs für die vordefinierte Route und
- Bestimmen (S3), basierend auf den bestimmten maximalen zulässigen Reifenlasten, einer empfohlenen maximalen Last für das Fahrzeug für die vordefinierte Route.

2. Verfahren (100, 200) nach Anspruch 1, wobei der Schritt des Erfassens (S1) von Straßentopographiedaten Folgendes umfasst:
- Veranlassen des Fahrzeugs oder eines anderen Fahrzeugs, entlang der vordefinierten Route zu fahren,
- Erfassen von Reifenverformungsdaten, die Verformungen der Reifen des Fahrzeugs oder des anderen Fahrzeugs darstellen, die auftreten, wenn das Fahrzeug oder das andere Fahrzeug entlang der vordefinierten Route fährt,
- Bestimmen der Straßentopographiedaten basierend auf den erfassten Reifenverformungsdaten.

3. Verfahren (100, 200) nach Anspruch 2, wobei die Reifen des Fahrzeugs oder des anderen Fahrzeugs mit Reifensensoren (24) bereitgestellt sind, die dazu konfiguriert sind, eine Verformung der einzelnen Reifen (7, 14) zu registrieren, wenn das Fahrzeug oder das andere Fahrzeug entlang der vordefinierten Route fährt, wobei der Schritt des Erfassens von Reifenverformungsdaten Folgendes umfasst:
- Erfassen von Reifenverformungsdaten mittels der Reifensensoren, wenn das Fahrzeug oder das andere Fahrzeug entlang der Route fährt.

4. Verfahren (200) nach Anspruch 3, umfassend, vor dem Schritt des Erfassens (S1) von Straßentopographiedaten für die vordefinierte Route:
- Montieren (P1), auf jeden Reifen des Fahrzeugs oder des anderen Fahrzeugs, einer Vielzahl der Reifensensoren, so dass diese in der Umfangsrichtung des Reifens verteilt sind, oder
- Integrieren (P2), beim Herstellen jedes Reifens des Fahrzeugs oder des anderen Fahrzeugs, einer Vielzahl der Reifensensoren in das Gummi des Reifens, so dass diese in der Umfangsrichtung des fertiggestellten Reifens verteilt werden.

5. Verfahren (100, 200) nach einem der Ansprüche 3-4, wobei die Reifensensoren (24) dazu konfiguriert sind, die Reifenverformung in einer Vielzahl von Richtungen, wie etwa der Längs-, der seitlichen und der vertikalen Richtung des jeweiligen Reifens (7, 14) zu registrieren.

6. Verfahren (100, 200) nach einem der Ansprüche 3-5, wobei der Schritt des Bestimmens (S2) einer jeweiligen maximalen zulässigen Reifenlast Folgendes umfasst:
- Bestimmen der jeweiligen maximalen zulässigen Reifenlast für jeden einzelnen Reifen basierend auf den erfassten Reifenverformungsdaten.

7. Verfahren (100, 200) nach einem der Ansprüche 1-6, wobei der Schritt des Erfassens (S1) von Straßentopographiedaten Folgendes umfasst:
- Veranlassen des Fahrzeugs oder des anderen Fahrzeugs, entlang der vordefinierten Route zu fahren, wobei das Fahrzeug mit einer optischen Kamera oder mit einem Detektor bereitgestellt ist, der einen Wellensender und einen Wellenempfänger zum Empfangen einer widergespiegelten Welle umfasst, wobei der Detektor geeignetermaßen einer eines Lidar-, eines Radar- oder eines Ultraschalldetektors ist,
- Abtasten der Straße mittels der optischen Kamera oder des Detektors, wenn das Fahrzeug oder das andere Fahrzeug entlang der Route fährt.

8. Verfahren (100, 200) nach einem der Ansprüche 1-7, wobei der Schritt des Bestimmens (S2) einer jeweiligen maximalen zulässigen Reifenlast Folgendes umfasst:
- Zugreifen auf gespeicherte Reifenverschleißdaten, in denen ein erwarteter Verschleiß eines einzelnen Reifens als eine Funktion von Kräften, die im Laufe der Zeit auf den einzelnen Reifen angewandt werden, dargestellt wird,
- Bestimmen der jeweiligen maximalen zulässigen Reifenlast für jeden einzelnen Reifen basierend auf den gespeicherten Reifenverschleißdaten.

9. Verfahren (100, 200) nach einem der Ansprüche 1-8, wobei der Schritt des Bestimmens (S2) einer jeweiligen maximalen zulässigen Reifenlast Folgendes umfasst:
- Zugreifen auf Reifenkennungsdaten, wobei die Reifenkennungsdaten Informationen über die Reifen des Fahrzeugs, wie etwa Art des Reifens, Hersteller, Modell des Reifens und/oder Abmessungen des Reifens, umfassen,
- Bestimmen der jeweiligen maximalen zulässigen Reifenlast basierend auf den Reifenkennungsdaten und den Straßentopographiedaten.

10. Computerprogramm, umfassend Programmcodemittel (1020) zum Durchführen der Schritte des Verfahrens (100, 200) nach einem der Ansprüche 1-9, wenn das Programm auf einem Computer ausgeführt wird.

11. Computerlesbares Medium (1010), das ein Computerprogramm enthält, das Programmcodemittel (1020) zum Durchführen der Schritte des Verfahrens (100, 200) nach einem der Ansprüche 1-9 umfasst, wenn das Programmprodukt auf einem Computer ausgeführt wird.

12. Steuerungseinheit (50) zum Bestimmen einer empfohlenen Last für ein Fahrzeug (1, 10, 20, 30, 40), das entlang einer vordefinierten Route zu betreiben ist, wobei die Steuerungseinheit dazu konfiguriert ist, die Schritte des Verfahrens (100, 200) nach einem der Ansprüche 1-9 durchzuführen.

13. Fahrzeug (1, 10, 20, 30, 40), umfassend:
- eine Steuerungseinheit (50) nach Anspruch 12,
- Reifensensoren (24), die dazu konfiguriert sind, eine Verformung der einzelnen Reifen (7, 14) zu registrieren, wenn das Fahrzeug in Bewegung ist, und die dazu konfiguriert sind, die Reifenverformungsdaten zu erzeugen, wobei die Steuerungseinheit dazu konfiguriert ist, die erzeugten Reifenverformungsdaten zu erfassen, wobei jeder Reifen des Fahrzeugs mit einer Vielzahl der Reifensensoren derart bereitgestellt ist, dass diese in der Umfangsrichtung des Reifens verteilt sind.

14. Verfahren (100, 200) nach einem der Ansprüche 1-9, wobei das Fahrzeug (30), für das eine empfohlene Last zu bestimmen ist, ein erstes Fahrzeug ist und das Verfahren Verwenden eines zweiten Fahrzeugs (20) umfasst, das gemäß dem Fahrzeug nach Anspruch 13 zum Erfassen der Straßentopographiedaten basierend auf den erzeugten Reifenverformungsdaten konfiguriert ist.

## Revendications

1. Procédé (100, 200) de détermination d'une charge maximale recommandée pour le fonctionnement d'un véhicule (1, 10, 20, 30, 40) le long d'un itinéraire prédéfini, comprenant :
- l'acquisition (S1) de données de topographie routière pour ledit itinéraire prédéfini, les données de topographie routière contenant des informations sur la topographie de la route (22) le long dudit itinéraire prédéfini,
- la détermination (S2), sur la base des données de topographie routière acquises, d'une charge de pneumatique maximale admissible respective pour chaque pneumatique individuel (7, 14) du véhicule pour ledit itinéraire prédéfini, et
- la détermination (S3), sur la base des charges de pneumatiques maximales admissibles déterminées, d'une charge maximale recommandée pour le véhicule pour ledit itinéraire prédéfini.

2. Procédé (100, 200) selon la revendication 1, dans lequel l'étape d'acquisition (S1) de données de topographie routière comprend :
- le fait d'amener ledit véhicule ou un autre véhicule à se déplacer le long dudit itinéraire prédéfini,
- le fait d'acquérir des données de déformation de pneumatiques représentatives des déformations des pneumatiques dudit véhicule ou dudit autre véhicule se produisant lorsque ledit véhicule ou ledit autre véhicule se déplace le long dudit itinéraire prédéfini,
- la détermination des données de topographie routière en fonction des données de déformation des pneumatiques acquises.

3. Procédé (100, 200) selon la revendication 2, dans lequel les pneumatiques dudit véhicule ou dudit autre véhicule sont pourvus de capteurs de pneumatiques (24) configurés pour enregistrer la déformation des pneumatiques individuels (7, 14) lorsque ledit véhicule ou ledit autre véhicule se déplace le long dudit itinéraire prédéfini, dans lequel ladite étape d'acquisition de données de déformation de pneumatiques comprend :
- l'acquisition de données de déformation des pneumatiques au moyen desdits capteurs de pneumatiques lorsque ledit véhicule ou ledit autre véhicule se déplace le long dudit itinéraire.

4. Procédé (200) selon la revendication 3, comprenant, avant ladite étape d'acquisition (S1) de données de topographie routière pour ledit itinéraire prédéfini :
- le fait de monter (P1), sur chaque pneumatique dudit véhicule ou dudit autre véhicule, une pluralité desdits capteurs de pneumatiques de telle sorte qu'ils sont répartis dans la direction circonférentielle du pneumatique, ou
- l'intégration (P2), lors de la fabrication de chaque pneumatique dudit véhicule ou dudit autre véhicule, d'une pluralité desdits capteurs de pneumatiques dans le caoutchouc du pneumatique de telle sorte qu'ils sont répartis dans la direction circonférentielle du pneumatique terminé.

5. Procédé (100, 200) selon l'une quelconque des revendications 3 et 4, dans lequel les capteurs de pneumatiques (24) sont configurés pour enregistrer la déformation du pneumatique dans une pluralité de directions, telles que les directions longitudinale, latérale et verticale du pneumatique respectif (7, 14).

6. Procédé (100, 200) selon l'une quelconque des revendications 3 à 5, dans lequel ladite étape de détermination (S2) d'une charge de pneumatique maximale admissible respective comprend :
- la détermination de la charge de pneumatique maximale admissible respective pour chaque pneumatique individuel sur la base desdites données de déformation de pneumatique acquises.

7. Procédé (100, 200) selon l'une quelconque des revendications 1 à 6, dans lequel l'étape d'acquisition (S1) de données de topographie routière comprend :
- le fait de faire circuler ledit véhicule ou un autre véhicule le long dudit itinéraire prédéfini, dans lequel ledit véhicule est équipé d'une caméra optique ou d'un détecteur comprenant un émetteur d'ondes et un récepteur d'ondes pour recevoir une onde réfléchie, dans lequel le détecteur est de manière appropriée l'un d'un détecteur Lidar, d'un radar ou d'un détecteur à ultrasons,
- le fait de scanner la route au moyen de la caméra optique ou du détecteur lorsque ledit véhicule ou ledit autre véhicule circule sur ledit itinéraire.

8. Procédé (100, 200) selon l'une quelconque des revendications 1 à 7, dans lequel ladite étape de détermination (S2) d'une charge de pneumatique maximale admissible respective comprend :
- l'accès à des données d'usure des pneumatiques stockées, dans lesquelles l'usure prévue d'un pneumatique individuel est représentée en fonction des forces appliquées au pneumatique individuel au fil du temps,
- la détermination de la charge de pneumatique maximale admissible respective pour chaque pneumatique individuel sur la base desdites données d'usure des pneumatiques stockées.

9. Procédé (100, 200) selon l'une quelconque des revendications 1 à 8, dans lequel ladite étape de détermination (S2) d'une charge de pneumatique maximale admissible respective comprend :
- l'accès à des données d'identification de pneumatique, dans lequel les données d'identification de pneumatique comprennent des informations sur les pneumatiques dudit véhicule, telles que le type de pneumatique, le fabricant, le modèle du pneumatique et/ou les dimensions du pneumatique,
- la détermination de la charge de pneumatique maximale admissible respective sur la base desdites données d'identification de pneumatiques et desdites données de topographie routière.

10. Programme informatique comprenant des moyens de code de programme (1020) pour exécuter les étapes du procédé (100, 200) selon l'une quelconque des revendications 1 à 9 lorsque ledit programme est exécuté sur un ordinateur.

11. Support lisible par ordinateur (1010) portant un programme informatique comprenant des moyens de code de programme (1020) pour exécuter les étapes du procédé (100, 200) selon l'une quelconque des revendications 1 à 9 lorsque ledit produit de programme est exécuté sur un ordinateur.

12. Unité de commande (50) pour la détermination d'une charge recommandée pour le fonctionnement d'un véhicule (1, 10, 20, 30, 40) le long d'un itinéraire prédéfini, l'unité de commande étant configurée pour exécuter les étapes du procédé (100, 200) selon l'une quelconque des revendications 1 à 9.

13. Véhicule (1, 10, 20, 30, 40) comprenant :
- une unité de commande (50) selon la revendication 12,
- des capteurs de pneumatiques (24) configurés pour enregistrer la déformation des pneumatiques individuels (7, 14) lorsque le véhicule est en mouvement et configurés pour générer lesdites données de déformation de pneumatique, dans lequel l'unité de commande est configurée pour acquérir les données de déformation de pneumatiques générées, dans lequel chaque pneumatique du véhicule est pourvu d'une pluralité desdits capteurs de pneumatiques de telle sorte qu'ils sont répartis dans la direction circonférentielle du pneumatique.

14. Procédé (100, 200) selon l'une quelconque des revendications 1 à 9, dans lequel ledit véhicule (30) pour lequel une charge recommandée doit être déterminée est un premier véhicule, le procédé comprend l'utilisation d'un second véhicule (20) configuré selon le véhicule de la revendication 13 pour acquérir lesdites données de topographie routière sur la base des données de déformation de pneumatique générées.
